# DEMANDE DE BREVET EUROPEEN

(11) **EP 4 841 270 A1**
(43) Date de publication de la demande: **18.11.2026**
(21) Numéro de dépôt: 26177269.3
(22) Date de dépôt: 07.05.2026
(51) Int. Cl.: G01Q 60/30

(54) **DISPOSITIF DE CARACTERISATION D'UN ECHANTILLON PIEZOELECTRIQUE**

(30) Priorité: 13.05.2025 FR 2505058
(71) Demandeur: Commissariat à l'Energie Atomique et aux Energies Alternatives, 75015 Paris (FR)
(72) Inventeur: VALLOIRE, Hugo, 38054 GRENOBLE CEDEX 09 (FR); BOROWIK, Lukasz, 38054 GRENOBLE CEDEX 09 (FR); JALABERT, Thomas, 38054 GRENOBLE Cedex 09 (FR)
(74) Mandataire: Atout PI Laplace

(57) **Abrégé**

L'invention concerne un dispositif de caractérisation d'un échantillon piézoélectrique ayant une électrode inférieure et une surface supérieure, le dispositif comprenant :
- une pointe conductrice placée à une extrémité d'un levier et destinée à être placée en contact avec un point de la surface supérieure ;
- un générateur de tension ;
- une chaine de mesure configurée pour générer un signal de mesure de la réponse électromécanique de l'échantillon ;
- un actionneur mécanique (A2) configuré pour stimuler l'ensemble formé par la pointe conductrice (P1) et levier (L1), ou l'échantillon piézoélectrique (E1), par une oscillation mécanique à une seconde pulsation (ω_{meca}) distincte d'une première pulsation (ω_{elec}) ;
- un circuit de commande configuré pour commander le générateur de tension de manière maintenir une composante continue (V_{CAR,DC}) égale à une tension de contact (V_{CPD}) par l'intermédiaire d'un signal de commande (V_{cont}) à une troisième pulsation (ω_{meca1}, ω_{meca2}, ω_{meca3}) fonction de la seconde pulsation (ω_{meca}).

## Description

La présente invention concerne le domaine de la caractérisation de matériaux en utilisant la technique de microscopie à force atomique. Plus particulièrement, l'invention concerne un procédé de caractérisation d'un échantillon piézoélectrique avec un fonctionnement en mode « microscopie à force piézoélectrique PFM (acronyme de l'expression en anglais Piezoresponse Force Microscopy) ».

Les couches minces en matériaux piézoélectriques et/ou ferroélectriques sont utilisées dans de nombreuses applications en microélectronique. On cite à titre d'exemple non limitatif les applications de dispositifs radiofréquences (filtres 4G, 5G, 6G), les mémoires émergentes pour les applications embarquées (FeRAM, FeFET) ou encore les technologies de capteurs/actionneurs miniaturisés (MEMS).

La mesure quantitative des propriétés ferroélectriques et piézoélectriques des couches minces présente un défi technique et expérimental. En effet, ce type de caractérisation est sensible à plusieurs artefacts de mesure tels que les effets électrostatiques induits par la mesure elle-même.

La « microscopie à force piézoélectrique » PFM est un mode de fonctionnement particulier de la « microscopie à force atomique » AFM (acronyme de l'expression en anglais Atomic Force Microscopy). Ainsi, pour bien comprendre le contexte de l'invention, nous allons commencer par expliquer d'une manière générale le fonctionnement de la microscopie à force atomique AFM et de la microscopie à force piézoélectrique PFM.

La microscopie à force atomique AFM est une technique de microscopie permettant de mesurer la topographie d'une surface d'un matériau avec une précision de l'ordre atomique. Un microscope à force atomique dispose d'une pointe fine solidaire avec un levier. L'ensemble du levier et de la pointe présentent des dimensions de l'ordre du micromètre. Pour les mesures de topographie en mode contact, la pointe est mise en contact avec la surface de l'échantillon. La pointe est déplacée de manière à balayer la surface de l'échantillon. Une variation de topographie de la surface exerce une force sur la pointe induisant la déformation du levier. Cette déformation est mesurée avec un système de laser et de photodiode. En effet, la déformation du levier induit un changement du parcours optique du laser détecté par la photodiode.

La microscopie à force piézoélectrique PFM est un mode de fonctionnement particulier de la microscopie à force atomique AFM. Ce mode permet l'acquisition simultanée de la topographie et de la réponse piézoélectrique d'un échantillon piézoélectrique. Une couche conductrice est déposée sur une face de l'échantillon piézoélectrique pour réaliser une électrode inférieure. Lorsque le mode de fonctionnement PFM est choisi, un signal électrique alternatif de stimulation est injecté entre l'électrode inférieure et la pointe en contact avec la surface supérieure de l'échantillon. La pointe se comporte comme une électrode supérieure de l'ensemble pointe - couche piézoélectrique - électrode inférieure. Cela induit une réponse électromécanique locale de l'échantillon piézoélectrique, par effet piézoélectrique inverse. La réponse consiste en des déplacements latéraux et/ou verticaux proportionnellement aux caractéristiques piézoéléctriques de l'échantillon et au signal injecté. Ces déplacements sont mesurés grâce à la réflexion d'un laser incident sur l'extrémité du levier vers une photodiode à quatre quadrants, par détection différentielle.

La microscopie à force piézoélectrique avec une spectroscopie de commutation de la polarisation SS-PFM (pour Switching Spectroscopy PFM en anglais) est un mode particulier de « la microscopie à force piézoélectrique » PFM. La microscopie SS-PFM permet d'exploiter les caractéristiques piézoélectriques et ferroélectriques de l'échantillon avec plus de précision. En plus du premier signal électrique sinusoïdal habituellement utilisé en mode PFM, un signal créneau modulant un second signal périodique est appliqué entre la pointe et l'électrode inférieure. Nous allons décrire ce signal d'une manière plus détaillée dans la suite de la description. Cette combinaison de signaux permet de provoquer des commutations locales de la polarisation électrique locale de l'échantillon tout en mesurant la réponse électromécanique de l'échantillon. Les commutations permettent d'obtenir une courbe d'hystérésis locale pour chaque point balayé par la pointe.

Cependant, pour la microscopie à force piézoélectrique PFM (et les autres modes dérivés comme le SS-PFM), la quantification des mesures présente un défi expérimental majeur car sensible à plusieurs artefacts de mesure. L'artefact de mesure principal est dû aux forces électrostatiques parasitiques qui s'appliquent entre le levier et la surface de l'échantillon, ainsi qu'entre la pointe et la surface de l'échantillon. Cette composante électrostatique parasitique s'ajoute à la composante d'intérêt constituée par la réponse électromécanique du matériau par effet piézoélectrique inverse.

La publication scientifique [1] propose d'utiliser un levier rigide pour diminuer la déformation du levier sous l'effet des forces électrostatiques et donc de diminuer l'influence de la composante électrostatique parasitique lors des mesures. La solution proposée présente les inconvénients suivants: une perte de sensibilité de la mesure, surtout en résonance; ainsi qu'une fréquence de résonance du système plus élevée, pouvant être en dehors de la gamme fréquentielle du système de détection.

La publication scientifique [2] propose le positionnement du laser sur un point aveugle électrostatique (ESBS : Electrostatic Blind Spot) pour minimiser les artefacts électrostatiques entre le levier et la surface de l'échantillon. Cependant, cette solution nécessite une longue procédure en amont des mesures et engendre une perte de sensibilité. De plus, la solution proposée dans [2] n'est pas compatible avec un fonctionnement en résonance du dispositif. La solution de [2] ne permet pas d'agir sur les artefacts électrostatiques relatifs à l'interaction entre la pointe et la surface de l'échantillon et se limite aux effets dits capacitifs entre le levier et la surface de l'échantillon.

Pour pallier les limitations des solutions existantes en ce qui concerne la dégradation de la précision des mesures sous l'effet des artefacts électrostatiques, l'invention propose un dispositif expérimental de caractérisation comprenant en outre un actionneur supplémentaire configuré pour appliquer une oscillation mécanique sur l'ensemble formé par le levier et la pointe par rapport à l'échantillon ou inversement. L'oscillation mécanique supplémentaire est à une pulsation différente de celle du signal électrique de stimulation appliqué par le générateur. Le dispositif selon l'invention exploite une composante spectrale du signal mesuré, à une pulsation qui dépend de la pulsation de l'oscillation mécanique, pour annuler le bruit électrostatique.

L'invention a pour objet un dispositif de caractérisation d'un échantillon piézoélectrique ayant une électrode inférieure et une surface supérieure, le dispositif comprenant.
- une pointe conductrice placée à une extrémité d'un levier ;
- un premier actionneur configuré pour placer la pointe conductrice en contact avec un point de la surface supérieure ;
L'ensemble formé par la pointe conductrice et levier présente une différence de potentiel électrique avec la surface supérieure au niveau dudit point de contact; ladite différence de potentiel étant dénommé tension de contact ;
- un générateur de tension configuré pour appliquer, entre l'électrode inférieure et la pointe conductrice, un signal de caractérisation ayant une composante alternative à une première pulsation et une composante continue ;
- un second actionneur mécanique configuré pour stimuler l'ensemble formé par la pointe conductrice et levier, ou pour stimuler l'échantillon piézoélectrique, par une oscillation mécanique selon une direction normale à la surface supérieure ;
   l'oscillation mécanique étant à une seconde pulsation distincte de la première pulsation ;
- une chaine de mesure configurée pour générer un signal de mesure de la réponse électromécanique de l'échantillon ;
- un circuit de commande configuré pour commander le générateur de tension pour maintenir ladite composante continue égale à la tension de contact par l'intermédiaire d'un signal de commande ;
ledit signal de commande étant généré, à partir d'au moins une composante spectrale du signal de mesure, à une troisième pulsation fonction de la seconde pulsation.

Selon un aspect particulier de l'invention, la troisième pulsation est égale à un multiple de la seconde pulsation.

Selon un aspect particulier de l'invention, la troisième pulsation est égale à la première pulsation plus ou moins un multiple de la seconde pulsation.

Selon un aspect particulier de l'invention, le circuit de commande comprend :
- au moins un filtre passe bande configuré pour extraire la composante spectrale du signal de mesure à la troisième pulsation; la troisième pulsation étant égale à un multiple de la seconde pulsation ;
- un régulateur associé audit filtre pour générer le signal de commande de manière à maintenir l'amplitude de la composante spectrale du signal de mesure généré ledit filtre à une valeur minimale.

Selon un aspect particulier de l'invention, le circuit de commande comprend :
- au moins un filtre passe bande configuré pour extraire la composante spectrale du signal de mesure à la troisième pulsation; la troisième pulsation étant égale à la première pulsation plus ou moins un multiple de la seconde pulsation ;
- un régulateur associé audit filtre pour générer le signal de commande de manière à maintenir à zéro l'amplitude d'un signal intermédiaire extrait à partir de la composante spectrale du signal de mesure généré ledit filtre.

Selon un aspect particulier de l'invention, le circuit de commande comprend :
- une pluralité de filtres passe bande de rangs i=1 à N, N étant un entier naturel non nul, chaque filtre de rang i étant configuré pour extraire une composante spectrale du signal de mesure à une pulsation égale à i fois la seconde pulsation ;
- une pluralité de régulateurs de rangs i=1 à N ; chaque régulateur de rang i étant configuré pour générer un signal de commande élémentaire de manière à maintenir l'amplitude de la composante spectrale du signal de mesure généré le filtre de rang i à une valeur minimale.

Selon un aspect particulier de l'invention, le circuit de commande comprend :
- une pluralité de filtres passe bande de rangs j=1 à N', N'étant un entier naturel non nul, chaque filtre de rang j étant configuré pour extraire une composante spectrale du signal de mesure à une pulsation égale à la première pulsation plus ou moins j fois la seconde pulsation ;
- une pluralité de régulateurs de rangs j=1 à N' ; chaque régulateur de rang j étant configuré pour générer un signal de commande élémentaire de manière à maintenir à zéro l'amplitude d'un signal intermédiaire extrait à partir de la composante spectrale du signal de mesure généré le filtre de rang j.

Selon un aspect particulier de l'invention, le circuit de commande comprend un calculateur configuré pour générer un signal de commande correspondant à la moyenne des signaux de commande élémentaires.

Selon un aspect particulier de l'invention, le calculateur est configuré pour écarter un signal parmi les signaux de commande élémentaires du calcul de la moyenne lorsqu'il s'écarte des autres signaux de commande élémentaires par un seuil d'écartement prédéterminé.

Selon un aspect particulier de l'invention, chaque filtre passe bande est réalisé par un amplificateur à détection synchrone.

Selon un aspect particulier de l'invention, chaque régulateur est un régulateur proportionnel-intégral-dérivé.

Selon un aspect particulier de l'invention, chaque régulateur est un régulateur proportionnel-intégral-dérivé analogique.

Selon un aspect particulier de l'invention, chaque régulateur est un régulateur proportionnel-intégral-dérivé numérique.

Selon un aspect particulier de l'invention, le premier actionneur est configuré pour appliquer une force de contact continue sur l'ensemble formé par la pointe conductrice et levier. Le second actionneur est configuré pour appliquer une force d'oscillation non nulle sur l'ensemble formé par la pointe conductrice et levier. L'amplitude de la force d'oscillation étant strictement inférieure à celle de la force de contact.

Selon un aspect particulier de l'invention, l'ensemble formé par la pointe, l'échantillon et l'électrode inférieure présente une pulsation de résonance. La seconde pulsation est choisie égale à la pulsation de résonance.

Selon un aspect particulier de l'invention, l'ensemble formé par la pointe, l'échantillon et l'électrode inférieure présente une pulsation de résonance. La première pulsation est choisie égale à la pulsation de résonance. La seconde pulsation est choisie hors de la plage de pulsations délimitée par un pic de résonance autour de la pulsation de résonance.

D'autres caractéristiques et avantages de la présente invention apparaîtront mieux à la lecture de la description qui suit en relation aux dessins annexés suivants :
La figure 1a illustre un premier mode de réalisation du dispositif expérimental selon l'invention.
La figure 1b illustre un deuxième mode de réalisation du dispositif expérimental selon l'invention.
La figure 2a illustre un premier mode de réalisation du circuit de commande du dispositif expérimental selon l'invention.
La figure 2b illustre la variation de l'amplitude d'une composante spectrale mécanique du signal de mesure en fonction du la composante continue du signal de caractérisation dans le premier mode de réalisation du circuit de commande du dispositif expérimental selon l'invention.
La figure 3a illustre un deuxième mode de réalisation du circuit de commande du dispositif expérimental selon l'invention.
La figure 3b illustre la variation de l'amplitude de plusieurs composantes spectrales mécaniques du signal de mesure en fonction de la composante continue du signal de caractérisation dans le deuxième mode de réalisation du circuit de commande du dispositif expérimental selon l'invention.
La figure 4a illustre un troisième mode de réalisation du circuit de commande du dispositif expérimental selon l'invention.
La figure 4b illustre la variation linéaire de l'amplitude d'une pluralité de signaux générés à partir de la composante spectrale mécanique du signal de mesure en fonction de la composante continue du signal de caractérisation dans le troisième mode de réalisation selon l'invention.

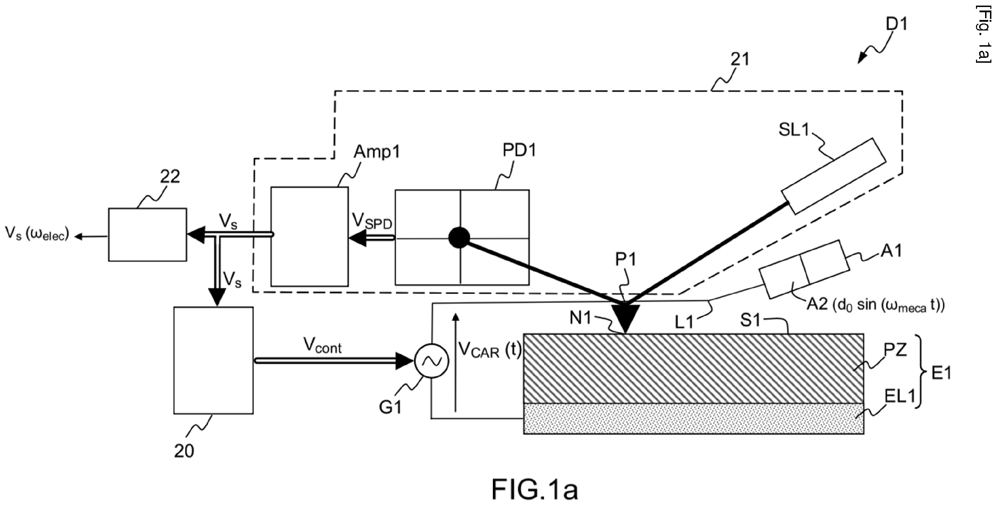

La figure 1a illustre un dispositif expérimental D1 selon l'invention. Le dispositif expérimental D1 est configuré pour mettre en œuvre un procédé de caractérisation d'un échantillon de test E1 selon un mode de réalisation de l'invention. Le dispositif expérimental D1 comprend une pointe conductrice P1 solidaire à une extrémité d'un levier L1, un premier actionneur A1 pour commander mécaniquement le levier L1, un second actionneur A2 pour commander mécaniquement le levier L1, une source de laser SL1, un générateur de tension G1, une photodiode à quatre quadrants PD1, un étage amplificateur AMP1, un circuit de commande 20, et un circuit d'acquisition 22.

L'échantillon de test E1 comprend une couche mince PZ1 en un matériau piézoélectrique et une couche électriquement conductrice jouant le rôle d'une électrode inférieure EL1. L'électrode inférieure EL1 est une couche déposée sur une face de la couche PZ1. La face opposée à celle de l'électrode inférieure constitue la surface à caractériser de l'échantillon, elle est notée S1.

À titre d'exemple, la couche PZ1 présente une épaisseur comprise entre 5 nm et 10µm. À titre d'exemple, la couche PZ1 est réalisée en titano-zirconates de plomb PZT, en titanate de baryum BaTiO3 ou tout autre matériau piézoélectrique et ferroélectrique. À titre d'exemple, l'électrode inférieure EL1 est réalisée en cuivre ou en aluminium ou en platine.

La pointe P1 est destinée à être mise en contact avec la surface S1. Le point de contact noté N1 est le point à caractériser. La source de laser SL1 est placée de manière à émettre un rayon laser sur la face supérieure de la pointe P1. Le rayon laser est réfléchi par la pointe P1 vers la photodiode à quatre quadrants PD1. Au repos, le rayon laser est réfléchi sur le centre de la photodiode à quatre quadrants. Il s'agit d'un calibrage pour déterminer la référence de la mesure.

Le générateur de tension G1 génère un signal électrique alternatif de caractérisation noté V_{CAR}(t) entre l'électrode inférieure EL1 et la pointe P1 en contact avec la surface supérieure S1 de l'échantillon E1. Le signal V_{CAR}(t) est une superposition d'une composante alternative V_{CAR,AC} à une première pulsation ω_{elec} avec une composante continue V_{CAR,DC}. ${V}_{CAR} \left(t\right) = {V}_{CAR , DC} \left(t\right) + {V}_{CAR , AC} \left(t\right) = {V}_{CAR , DC} \left(t\right) + {V}_{AC} ∗ sin \left({ω}_{elec}t\right)$

Le signal V_{CAR}(t) est utilisé pour créer une déformation oscillatoire ${D}_{pi é zo}^{ω}$ de la surface de l'échantillon au point de contact N1 par effet piézoélectrique inverse, à la première pulsation ω_{elec}. Le générateur G1 est commandé par le circuit de commande 20 par l'intermédiaire d'un signal de commande noté V_{cont}. Le signal de commande V_{cont} est un signal de consigne déterminant les caractéristiques fréquentielles et d'amplitude du signal de stimulation V_{CAR}(t), plus particulièrement l'amplitude de la composante continue V_{CAR,DC}.

L'application du signal de caractérisation V_{CAR}(t) induit une réponse électromécanique locale au point N1 de la couche piézoélectrique PZ1. La réponse consiste en un déplacement selon la direction Z orthogonale à la surface de l'échantillon S1 proportionnellement aux caractéristiques piézoélectriques de l'échantillon et au signal injecté. Ces déplacements ${D}_{pi é zo}^{ω}$ sont mesurés grâce à la réflexion du laser incident sur l'extrémité du levier L1 vers la photodiode à quatre quadrants PD1, par détection différentielle. En effet, la réponse électromécanique de l'échantillon engendre une déformation du levier L1. La déformation du levier L1 engendre le changement d'angle d'incidence entre le laser et la partie supérieure de la pointe ce qui dévie le laser. Cela induit un déplacement du point d'incidence du rayon laser réfléchi sur la photodiode à quatre quadrants PD1. Cela induit la génération d'un signal de mesure différentiel par la photodiode DP1, noté V_{SPD}. Afin de quantifier l'amplitude du signal de mesure différentiel, ce dernier est amplifié par l'étage d'amplification AMP1 qui génère un signal de mesure amplifié Vₛ. Ainsi, l'amplitude du signal Vₛ dépend du déplacement local de l'échantillon. La phase du signal Vₛ correspond au déphasage entre la réponse du matériau piézoélectrique et la stimulation électrique. ${D}_{pi é zo}^{ω}$ constitue ainsi la composante piézoélectrique ou la composante d'intérêt pour la caractérisation de l'échantillon E1. Cependant, le déplacement total ${D}_{tot}^{ω}$ mesuré n'est pas constitué uniquement de la composante d'intérêt ${D}_{pi é zo}^{ω}$ car il comprend en outre une composante parasitique ${D}_{el}^{ω}$ qui correspond à un déplacement de bruit engendré par les interactions électrostatiques suivantes :
- Une force électrostatique locale au niveau du point de contact N1 entre la pointe P1 et la surface S1 de l'échantillon ;
- Une force électrostatique capacitive entre le levier L1 et la surface S1 de l'échantillon.

Les deux forces électrostatiques résultent de la différence de potentiel électrique entre d'une part l'ensemble formé par la pointe conductrice P1 et levier L1 conducteur et d'autre part la surface de l'échantillon S1 isolante électriquement. Ladite différence de potentiel est généralement dénommée « tension de contact » V_{CPD}. Ainsi la réponse totale ${D}_{tot}^{ω}$ à la première pulsation ω_{elec} en sortie de la chaine de mesure 21 est la somme de la composante piézoélectrique ${D}_{pi é zo}^{ω}$ et électrostatique ${D}_{el}^{ω}$*.* Elle est donnée par l'équation suivante : ${D}_{tot}^{ω} \left({ω}_{elec}\right) = {D}_{piezo}^{ω} \left({ω}_{elec}\right) + {D}_{el}^{ω} \left({ω}_{elec}\right)$ $\begin{matrix}{D}_{tot}^{ω} \left({ω}_{elec}\right) = {V}_{AC} . G \left({ω}_{elec}\right) . {d}_{33}^{eff} ∗ sin \left({ω}_{elec}t+θ\left({ω}_{elec}\right)\right) \\ + {V}_{AC} . G \left({ω}_{elec}\right) \frac{1}{k *} \frac{\partial C \left(z\right)}{\partial z} \left({V}_{CAR , DC}-{V}_{CPD}\right) sin \left({ω}_{elec}t\right)\end{matrix}$ avec : *G*(*ω_{elec}*) un coefficient d'amplification lié à la résonance du levier qui tend vers 1 pour des mesures hors résonance et qui est égal au facteur de qualité pour des mesures en résonance; ${d}_{33}^{eff}$ le coefficient piézoélectrique effectif longitudinal de l'échantillon au point N1 ; *k** la rigidité du système constitué de la surface de l'échantillon, de la pointe et contact et du levier ; $\frac{\partial C \left(z\right)}{\partial z}$ le gradient de capacité électrique du système constitué de la surface de l'échantillon, de la pointe en contact et du levier.

Le second actionneur A2 est configuré pour stimuler l'ensemble formé par la pointe conductrice P1 et le levier L1 par une oscillation mécanique supplémentaire d'expression *d*₀ * sin(*ω_{meca}t*) selon la direction Z normale à la surface supérieure S1. L'oscillation mécanique est à une deuxième pulsation ω_{meca} distincte de la première pulsation ω_{elec} de manière à éviter toute interférence entre l'oscillation mécanique supplémentaire et la réponse piézoélectrique de l'échantillon suite à l'application du signal de caractérisation V_{CAR}(t)- Par exemple, le second actionneur A2 est un oscillateur mécanique piézoélectrique situé à la base de la pointe P1. L'introduction d'une stimulation mécanique dynamique au sein du système permet d'ajouter une composante de force supplémentaire, oscillant de manière sinusoïdale à la deuxième pulsation *ω_{méca}* dont l'intensité est désignée par *F*₁. Ainsi, l'expression de la force totale de contact *F_{C}* appliquée au système est donnée par la relation suivante : ${F}_{C} \left({ω}_{m é ca}\right) = {F}_{0} + {F}_{1} sin \left({ω}_{m é ca}t\right)$ avec F₀ la force de contact constante appliquée par le premier actionneur A1.

Ainsi, l'introduction d'une stimulation mécanique dynamique supplémentaire, induit l'apparition d'au moins une composante spectrale supplémentaire V_{s,meca1} non nulle mesurable du signal de mesure Vₛ. Ladite composante spectrale supplémentaire
V_{s,meca1}(ω_{meca1}) est à une troisième pulsation w_{reca1} multiple non nul de la deuxième pulsation ω_{meca} ;
*ω*_{*méca*1} = *n. ω_{méca}* avec n entier naturel non nul.
L'amplitude de la composante spectrale V_{s,meca1} induite par l'oscillation mécanique du second actionneur A2 suit une variation parabolique en fonction de l'amplitude de la composante continue V_{CAR,DC} du signal de caractérisation. Ce couplage est obtenu grâce à la modulation de la rigidité k*du système par la force de contact *F_{C}*(*ω_{méca}*) elle-même fonction de l'oscillation mécanique appliquée par le second actionneur A2.
La parabole de la composante spectrale V_{s,meca1} présente un minimum au point correspondant à V_{CAR,DC}= V_{CPD}.

Le circuit de commande 20 est configuré pour réaliser les opérations suivantes :
- extraire au moins une composante spectrale à la troisième pulsation ω_{meca1} du signal de mesure Vₛ fourni par la chaine de mesure 21 ;
- générer le signal de commande noté V_{cont} pour commander l'amplitude de la composante continue V_{CAR,DC} du signal de caractérisation V_{CAR} de manière à maintenir l'amplitude de la composante spectrale à la troisième pulsation ω_{meca1} à une valeur minimum.

Par exemple, le circuit de commande 20 est configuré pour calculer la dérivée au cours du temps de l'amplitude de la composante spectrale à la troisième pulsation ω_{meca1} et la maintenir à une valeur proche de zéro par exemple, comprise entre -0,1 et 0,1 en agissant sur la composant continue V_{CAR,DC} du signal de caractérisation.

Les opérations réalisées par le circuit de commande 20 permettent ainsi de maintenir en temps réel ou de manière périodique l'égalité V_{CAR},_{DC}= V_{CPD}. Etant donné que la composante électrostatique ${D}_{el}^{ω}$ de la réponse totale ${D}_{tot}^{ω}$ à la première pulsation ω_{elec} est proportionnelle à la différence(*V_{CAR,DC}* - *V_{CPD}*), l'action du circuit de commande 20 sur le générateur G1 permet d'annuler ladite composante électrostatique ${D}_{el}^{ω}$ à la première pulsation ω_{elec}.

Le circuit d'acquisition 22 est configuré pour extraire la composante spectrale à la première pulsation ω_{elec} du signal de mesure Vₛ fourni par la chaine de mesure 21 qui correspond au mouvement réponse ${D}_{tot}^{ω}$ dans lequel le bruit électrostatique ${D}_{el}^{ω}$ a été éliminé par le maintien de l'égalité V_{CAR},_{DC}= V_{CPD} via le traitement de la composante spectrale à la troisième pulsation *ω*_{*méca*1}.

Alternativement, la troisième pulsation ω_{meca1} est une combinaison linéaire d'un multiple non nul de la deuxième pulsation ω_{meca} plus ou moins la première pulsation ω_{elec} ; ${ω}_{m é ca 1} = {ω}_{elec} ∓ N . {ω}_{m é ca}$ Dans ce cas, il est possible d'extraire un signal intermédiaire à partir de la composante spectrale V_{s,meca1} induite par l'oscillation mécanique du second actionneur A2 de sorte que ledit signal intermédiaire suit une variation linéaire en fonction de l'amplitude de la composante continue V_{CAR,DC} du signal de caractérisation. Plus particulièrement, lorsque la composante spectrale V_{s,meca1} est extraite via un amplificateur à verrouillage de phase LIA, ce dernier génère à sa sortie un signal intermédiaire dénommé par le signal « en phase » (In Phase signal en anglais) et noté X(V_{s,meca1} ). Le signal « en phase » représente la partie du signal mesuré qui est exactement en phase avec un signal de référence fourni à l'amplificateur à verrouillage de phase. Dans le contexte de l'invention, le signal de référence fourni à l'amplificateur à verrouillage de phase correspond au signal de commande sinusoïdale qui génère l'oscillation mécanique du deuxième actionneur A2. Dans le contexte de l'invention, le signal « en phase » varie de manière linéaire selon fonction de l'amplitude de la composante continue V_{CAR,DC} du signal de caractérisation qui s'annule lorsque V_{CAR,DC}= V_{CPD}. Ce couplage est obtenu grâce à la modulation de la rigidité k*du système par la force de contact *F_{C}*(*ω_{méca}*) elle-même fonction de l'oscillation mécanique appliquée par le second actionneur A2 . L'amplitude la composante spectrale V_{s,meca1} présente est égale à zéro au point correspondant à V_{CAR},_{DC}= V_{CPD}.

Le circuit de commande 20 est configuré pour réaliser les opérations suivantes:
- extraire au moins une composante spectrale à la troisième pulsation ω_{meca1} du signal de mesure Vₛ fourni par la chaine de mesure 21;
- générer le signal de commande noté V_{cont} pour commander l'amplitude de la composante continue V_{CAR,DC} du signal de caractérisation V_{CAR} de manière à maintenir l'amplitude du signal « en phase » X(V_{s,meca1} ) associée à la composante spectrale à la troisième pulsation ω_{meca1} égale à zéro ;

Les opérations réalisées par circuit de commande 20 permettent ainsi de maintenir en temps réel ou de manière périodique l'égalité V_{CAR},_{DC}= V_{CPD}. Etant donné que la composante électrostatique ${D}_{el}^{ω}$ de la réponse totale ${D}_{tot}^{ω}$ à la première pulsation ω_{elec} est proportionnelle à la différence(*V_{CAR,DC}* - *V_{CPD}*), l'action du circuit de commande 20 sur le générateur G1 permet d'annuler ladite composante électrostatique ${D}_{el}^{ω}$ à la première pulsation ω_{elec}. Ceci permet d'éliminer le bruit électrostatique dans le signal de mesure en temps réel.

Le dispositif de caractérisation selon l'invention permet de minimiser la composante électrostatique dans son ensemble, c'est-à-dire aussi bien la composante électrostatique capacitive entre le levier et la surface de l'échantillon, ainsi que la composante électrostatique locale qui s'applique entre la pointe et la surface de l'échantillon.

Le dispositif de caractérisation selon l'invention permet d'éliminer le bruit électrostatique de manière continue lors de la mesure sans recours à des opérations de calibrage ni de traitement de signal supplémentaire au niveau du circuit d'acquisition 22. De plus, le dispositif de caractérisation selon l'invention permet la minimisation du bruit indépendamment du point de contact sur la surface supérieure S1 de l'échantillon.

Le dispositif de caractérisation selon l'invention peut aussi bien être utilisé en balayage continu de la pointe sur la surface de l'échantillon, comme c'est le cas pour la technique PFM, que pour des modes plus avancés, comme le mode SS-PFM, en spectroscopie lors de mesure point par point. L'invention peut être utilisée pour des mesures PFM en résonance et hors résonance, et peut également s'intégrer avec des techniques de suivi de la fréquence de résonance par exemple avec la DFRT (acronyme de l'expression anglaise Dual Frequency Resonance Tracking).

L'ensemble constitué par le levier, la pointe, l'échantillon piézoélectrique et l'électrode forme un système mécanique local. Ce système mécanique présente une pulsation de résonance propre, notée ω₀. La pulsation de résonance dépend des caractéristiques géométriques et des matériaux qui constituent chaque élément de l'ensemble, ainsi que de la force du contact entre la pointe et l'échantillon. Ainsi, deux modes de fonctionnement sont envisageables : un fonctionnement en résonance et un fonctionnement hors résonance.

D'une part, le fonctionnement en résonance consiste à configurer le générateur G1 sur une première pulsation ω_{elec} égale à la pulsation de résonance ω₀. Cela permet de maximiser l'amplitude mesurée de la réponse électromécanique de l'échantillon à la sortie du circuit d'acquisition 22. En effet, l'amplitude des composantes spectrales à la première pulsation ω_{elec} est multipliée par le facteur de qualité du pic de résonance, ayant pour ordre de grandeur 100. Ainsi, la sensibilité de la mesure et le rapport signal sur bruit sont améliorés. Dans ce cas, la seconde pulsation ω_{meca} est choisie inférieure à la première pulsation ω_{elec}. Par exemple, pour un levier d'une rigidité de 3 *N.m*⁻¹ , la pulsation de résonnance est égale à 300 kHz et la seconde pulsation ω_{meca} est comprise entre 10 kHz et 100kHz.

D'autre part, le fonctionnement hors résonance consiste à configurer le générateur G1 sur une première pulsation ω_{elec} sensiblement inférieure à la pulsation de résonance ω₀. Dans ce cas, la seconde pulsation ω_{meca} est choisie égale à la pulsation de résonnance. Cela permet de maximiser l'amplitude de la composante spectrale à la troisième pulsation (qui dépend de la deuxième pulsation) utilisée par le circuit de commande 20 pour le maintien de l'égalité V_{CAR},_{DC}= V_{CPD} .

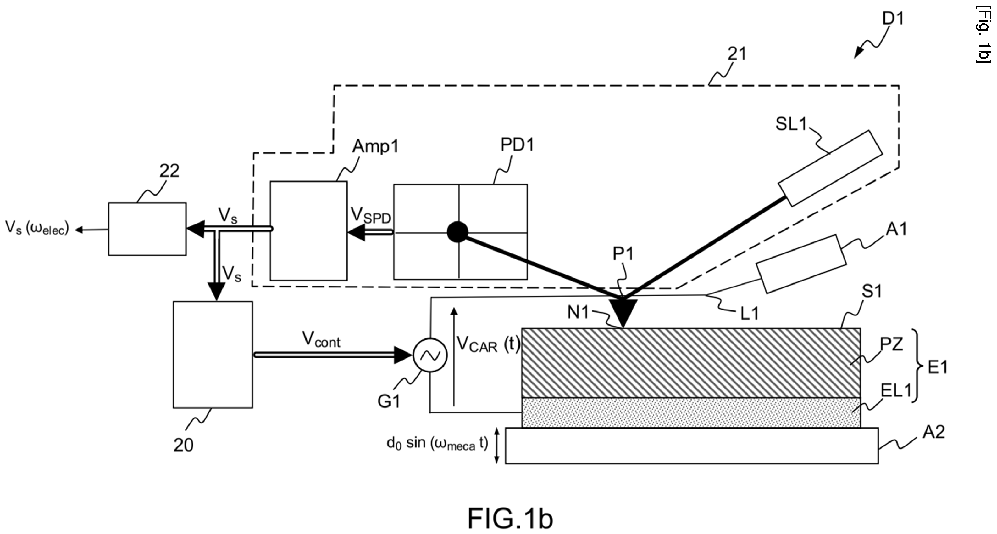

La figure 1b illustre un deuxième mode de réalisation du dispositif expérimental D1 selon l'invention. Le deuxième mode de réalisation reprend les caractéristiques et les avantages détaillées pour le premier mode de réalisation. Le deuxième mode de réalisation se distingue du premier mode de réalisation par l'implémentation du second actionneur A2. En effet, dans le second mode de réalisation, le second actionneur A2 est configuré pour stimuler l'échantillon par une oscillation mécanique supplémentaire d'expression *d*₀ * sin(*ω_{meca}t*) selon la direction Z normale à la surface supérieure S1. L'oscillation supplémentaire de l'échantillon par rapport à l'ensemble levier + pointe est équivalent à celui décrit dans le premier mode de réalisation et génère ainsi le même comportement décrit pour le premier mode de réalisation. Par exemple, le deuxième actionneur A2 est réalisé par un support vibrant équipé d'un actionneur piézoélectrique à large bande sur lequel est disposé l'échantillon. L'oscillation produite par le second actionneur A2 se propage à travers l'échantillon jusqu'au point de contact N1.

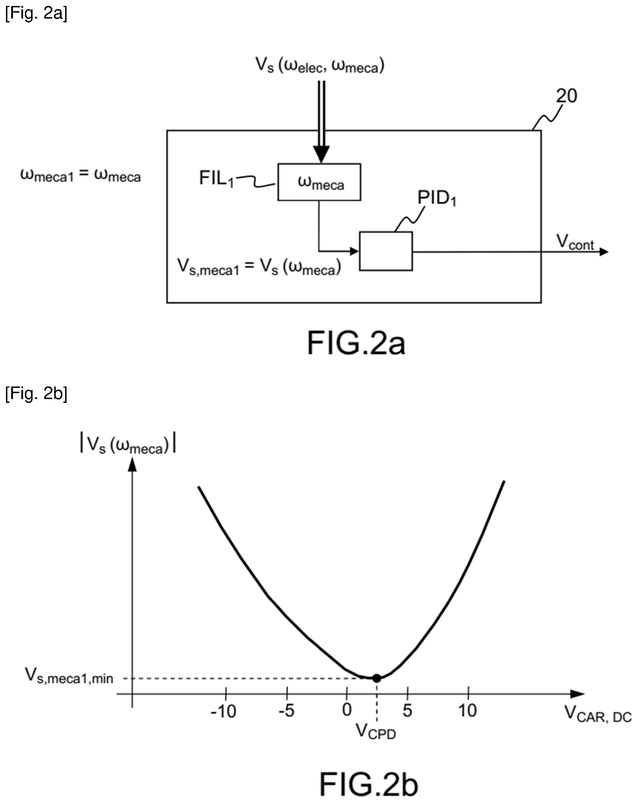

La figure 2a illustre un premier mode de réalisation du circuit de commande 20 du dispositif expérimental selon l'invention. Le circuit de commande 20 comprend un filtre passe bande FIL₁ et un régulateur PID₁ de type « proportionnel, intégral, dérivé ».

Le filtre passe bande FIL₁ reçoit le signal de mesure Vs fourni par la chaine de mesure 21. Le filtre passe bande FIL₁ est configuré pour extraire la composante spectrale du signal de mesure V_{s,meca1} à la troisième pulsation ω_{meca1}. La troisième pulsation ω_{meca1} est égale à un multiple de la seconde pulsation ω_{meca}. Dans l'exemple illustré, et à titre non limitatif, la troisième pulsation ω_{meca1} est égale à la deuxième pulsation ω_{meca}. Avantageusement, le filtre passe bande FIL₁ est réalisé par un amplificateur à détection synchrone, et plus particulièrement par un amplificateur à verrouillage de phase LIA (acronyme de Lock-In Amplifier). L'amplificateur à verrouillage de phase présente un avantage particulier dans la mise en œuvre de l'invention car il permet d'isoler uniquement composante à la troisième pulsation ω_{meca1} avec un excellent rapport signal sur bruit. De plus, l'amplificateur à verrouillage de phase permet d'indiquer l'amplitude et la phase de ladite composante qui sont des grandeurs d'intérêt.

Le régulateur PID₁ est configuré pour déterminer la composante continue du signal de caractérisation V_{CAR,DC} du signal de caractérisation V_{CAR} qui correspond au minimum V_{s,meca1,min} (consigne du régulateur) de la parabole de l'amplitude de la composante spectrale du signal de mesure V_{s,meca1}. Le régulateur PID₁ génère un signal de commande associé V_{cont} vers le générateur G1 afin de réguler la tension V_{CAR,DC} à la valeur calculée par le régulateur PID₁. Lorsque l'égalité V_{CAR},_{DC}=V_{CPD} n'est pas respectée, l'amplitude de la composante spectrale du signal de mesure V_{s,meca1} s'écarte de son point minimum et donc augmente. En réponse, le régulateur PID₁ modifie la consigne en V_{CAR,DC} portée par le signal de commande V_{cont} pour maintenir l'amplitude de la composante spectrale du signal de mesure V_{s,meca1} à son minimum et ainsi rétablir l'égalité V_{CAR,DC}=V_{CPD}.

Selon un aspect particulier de l'invention, le régulateur PID₁ est un régulateur PID analogique dans lequel les opérations de multiplication, d'intégration et de dérivation se font à l'aide de composants électroniques analogiques typiquement, des amplificateurs opérationnels, des résistances et des condensateurs. Cela permet d'avoir un temps de réponse assez rapide pour maintenir l'égalité V_{CAR,DC}=V_{CPD} en temps réel. Alternativement, le régulateur PID₁ est un régulateur PID numérique dans lequel les opérations de multiplication, d'intégration et de dérivation sont réalisées par un calcul discret, typiquement dans un microcontrôleur ou un automate programmable. Cela permet une grande flexibilité d'un point de vue des réglages, des ajustements, de l'ajout de filtres, et de la supervision en temps réel.

La figure 2b illustre la variation parabolique de l'amplitude de la composante spectrale du signal de mesure V_{s,meca1} en fonction de la composante continue V_{CAR,DC} du signal de caractérisation dans le circuit de commande 20 de la figure 2a. Lorsque de l'amplitude de la composante spectrale du signal de mesure V_{s,meca1} est à son minimum V_{s,meca1,min}, la tension V_{CAR,DC} est égale à la tension de contact V_{CPD}.

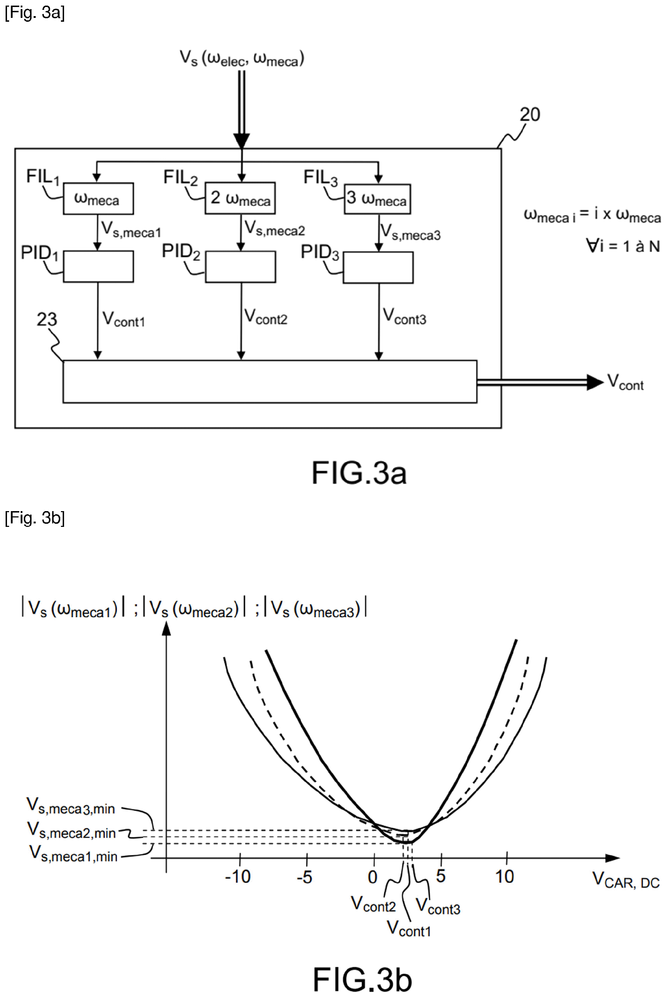

La figure 3a illustre un second mode de réalisation du circuit de commande 20 du dispositif expérimental selon l'invention. Le circuit de commande 20 comprend une pluralité de filtres passe bande FILᵢ de rangs i=1 à N, N étant un entier naturel non nul. Dans l'exemple illustré, nous avons choisi N=3 à titre illustratif non limitatif. Chaque filtre de rang i est configuré pour extraire une composante spectrale V_{s,mecai} du signal de mesure à une pulsation ω_{mecai} égale à i fois la seconde pulsation ω_{meca}. Chaque composante spectrale V_{s,mecai} varie selon une parabole en fonction la composante continue V_{CAR,DC} Comme illustré sur la figure 3b. Les caractéristiques et les avantages exposés pour le filtre FIL₁ du premier mode de réalisation du circuit de commande 20 restent valables pour le deuxième mode de réalisation. Le circuit de commande 20 comprend en outre une pluralité de régulateurs de type PIDᵢ de rangs i=1 à N. Chaque régulateur de rang i est configuré pour générer un signal de commande élémentaire V_{cont,i} de manière à maintenir l'amplitude de la composante spectrale du signal de mesure associée V_{s,mecai} généré par le filtre FILᵢ de même rang i à une valeur minimale V_{s,mecai,min}. Le circuit de commande 20 comprend un calculateur 23 configuré pour générer un signal de commande V_{cont} qui correspond à la moyenne des signaux de commande élémentaires V_{cont,i} générés par les régulateurs PIDᵢ. Cela permet d'avoir une estimation plus fiable de la consigne V_{CAR,DC} envoyée au générateur G1, puisque ladite consigne est dérivée de trois harmoniques différentes et non d'une seule. Avantageusement, le calculateur 23 est configuré pour écarter chaque signal parmi les signaux de commande élémentaires V_{cont,i} du calcul de la moyenne lorsque celui-ci s'écarte des autres signaux de commande élémentaires V_{cont,i} par un seuil d'écartement prédéterminé. Cette opération de sélection des signaux de commande élémentaires V_{cont,i} utilisé dans le calcul de la moyenne permet d'améliorer la fiabilité de la consigne V_{CAR,DC} envoyée au générateur G1.

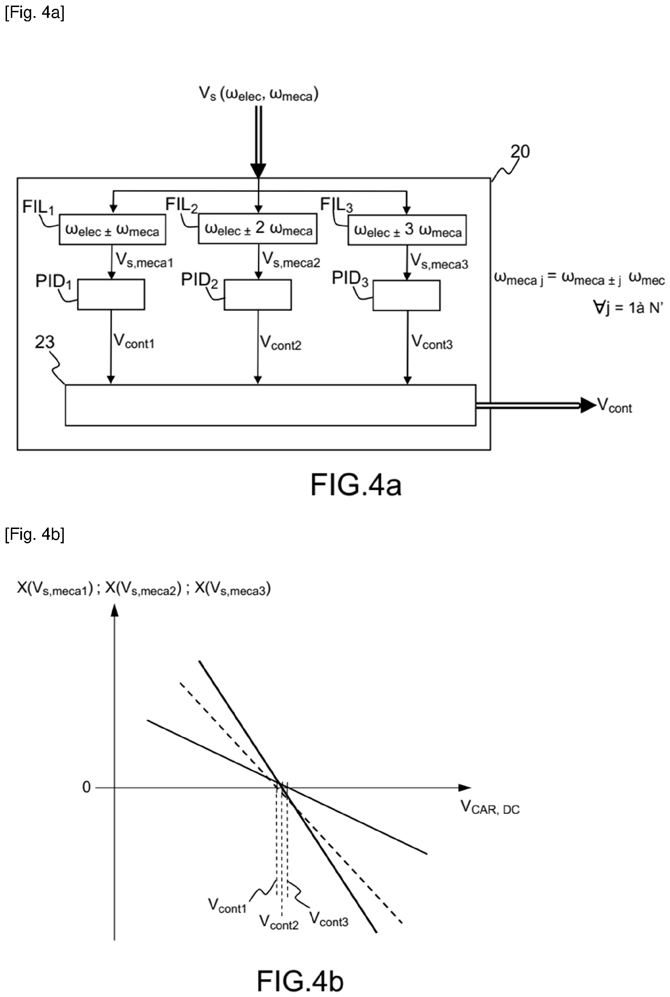

La figure 4a illustre un troisième mode de réalisation du circuit de commande 20 du dispositif expérimental selon l'invention. Le circuit de commande 20 comprend une pluralité de filtres passe bande FILⱼ de rangs j=1 à N', N'étant un entier naturel non nul. Dans l'exemple illustré, nous avons choisi N'=3 à titre illustratif non limitatif. Chaque filtre de rang j est configuré pour extraire une composante spectrale V_{s,mecaj} du signal de mesure à une pulsation ω_{mecaj} égale à la première pulsation ω_{elec} plus ou moins j fois la seconde pulsation ω_{meca}. Pour chaque composante spectrale V_{s,mecaj}, le signal « en phase » associé X(V_{s,mecaj}) varie de manière linéaire en fonction la composante continue V_{CAR,DC} et s'annule à V_{CAR,DC}= V_{CPD}. Le circuit de commande 20 comprend en outre une pluralité de régulateurs de type PIDⱼ de rangs j=1 à N. Chaque régulateur de rang j est configuré pour générer un signal de commande élémentaire V_{cont,j} de manière à annuler l'amplitude de chaque signal « en phase » X(V_{s,mecaj}) associé à la composante spectrale du signal de mesure V_{s,mecaj} générée par le filtre FlLⱼ de même rang j. Le circuit de commande 20 comprend un calculateur 23 configuré pour générer un signal de commande V_{cont} qui correspond à la moyenne des signaux de commande élémentaires V_{cont,j} générés par les régulateurs PIDⱼ. Cela permet d'avoir une estimation plus fiable de la consigne envoyée au générateur G1, puisque ladite consigne est dérivée de trois harmoniques différentes et non d'une seule. Avantageusement, le calculateur 23 est configuré pour écarter chaque signal parmi les signaux de commande élémentaires V_{cont,j} du calcul de la moyenne lorsque celui-ci s'écarte des autres signaux de commande élémentaires V_{cont,j} par un seuil d'écartement prédéterminé.

Le troisième mode de réalisation reprend les avantages et les caractéristiques du deuxième mode de réalisation du circuit de commande 20 concernant l'implémentation des filtres et des régulateurs.

La figure 4b illustre la variation linéaire de l'amplitude d'une pluralité de signaux « In Phase », X(V_{s,meca1}) à X(V_{s,meca3}), générés par des amplificateurs à verrouillage (Lock-In amplifier) à partir des composantes spectrales mécaniques V_{s,meca1} à V_{s,meca3} du signal de mesure Vₛ. On illustre une variation linéaire en fonction de la composante continue du signal de caractérisation V_{CAR,DC} dans le troisième mode de réalisation selon l'invention. Chaque droite s'annule à une valeur V_{cont1} à V_{cont3} associée autour de la valeur réelle de la tension de contact V_{CPD}.

Selon un aspect particulier de l'invention, le circuit de commande 20 comprend N=9 filtres passe bande avec leur régulateurs PID associés configurés pour maintenir l'égalité V_{CAR,DC} = V_{CPD} à partir des composantes spectrales du signal de mesure aux pulsations: 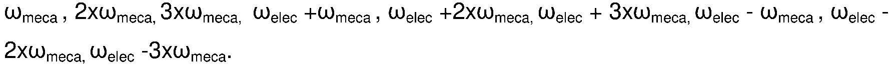 ωmeca , 2xwmeca, 3xwmeca, ωelec +ωmeca , ωelec +2xωmeca, ωelec + 3xwmeca, ωelec - ωmeca , ωelec - 2xωmeca, ωelec -3xωmeca.

### Références :

[1] O'Donnell, J., Haq, E. U., Silien, C., Soulimane, T., Thompson, D., & Tofail, S. A. M. (2021). A practical approach for standardization of converse piezoelectric constants obtained from piezoresponse force microscopy. Journal Of Applied Physics, 129(18).
[2] Killgore, J. P., Robins, L., & Collins, L. (2022). Electrostatically-blind quantitative piezoresponse force microscopy free of distributed-force artifacts. Nanoscale Advances, 4(8), 2036-2045.

## Revendications

1. Dispositif de caractérisation (D1) d'un échantillon piézoélectrique (E1) ayant une électrode inférieure (EL1) et une surface supérieure (S1), le dispositif comprenant :
- une pointe conductrice (P1) placée à une extrémité d'un levier (L1) ;
- un premier actionneur (A1) configuré pour placer la pointe conductrice (P1) en contact avec un point (N1) de la surface supérieure (S1) ;
L'ensemble formé par la pointe conductrice (P1) et levier (L1) présentant une différence de potentiel électrique avec la surface supérieure (S1) au niveau dudit point de contact (N1) ; ladite différence de potentiel étant dénommé tension de contact (V_{CPD}) ;
- un générateur de tension (G1) configuré pour appliquer, entre l'électrode inférieure (EL1) et la pointe conductrice (P1), un signal de caractérisation (V_{CAR}) ayant une composante alternative (V_{CAR,AC}) à une première pulsation (ω_{elec}) et une composante continue (V_{CAR,DC}) ;
- un second actionneur mécanique (A2) configuré pour stimuler l'ensemble formé par la pointe conductrice (P1) et levier (L1), ou l'échantillon piézoélectrique (E1), par une oscillation mécanique selon une direction normale à la surface supérieure (S1) ; l'oscillation mécanique étant à une seconde pulsation (ω_{meca}) distincte de la première pulsation (ω_{elec}) ;
- une chaine de mesure (21) configurée pour générer un signal de mesure (Vₛ) de la réponse électromécanique de l'échantillon ;
- un circuit de commande (20) configuré pour commander le générateur de tension (G1) pour maintenir ladite composante continue (V_{CAR,DC}) égale à la tension de contact (V_{CPD}) par l'intermédiaire d'un signal de commande (V_{cont}) ;
ledit signal de commande (V_{cont}) étant généré à partir d'au moins une composante spectrale du signal de mesure (V_{s,meca1} , V_{s,meca2} V_{s,meca3}) à une troisième pulsation (ω_{meca1}, ω_{meca2}, ω_{meca3}) égale à un multiple de la seconde pulsation (ω_{meca}) ou égale à la première pulsation (ω_{elec}) plus ou moins un multiple de la seconde pulsation (ω_{meca}).

2. Dispositif de caractérisation (D1) selon la revendication 1 dans lequel le circuit de commande (20) comprend :
- au moins un filtre (FlL₁) passe bande configuré pour extraire la composante spectrale du signal de mesure (V_{s,meca1} ) à la troisième pulsation (ω_{meca1}) ; la troisième pulsation (ω_{meca1}) étant égale à un multiple de la seconde pulsation (ω_{meca}) ;
- un régulateur (PID₁) associé audit filtre (FIL₁) pour générer le signal de commande (V_{cont}) de manière à maintenir l'amplitude de la composante spectrale du signal de mesure (V_{s,meca1}) généré par ledit filtre (FIL₁) à une valeur minimale (V_{s,meca1,min}) ;

3. Dispositif de caractérisation (D1) selon la revendication 1 dans lequel le circuit de commande (20) comprend :
- au moins un filtre (FlL₁) passe bande configuré pour extraire la composante spectrale du signal de mesure (V_{s,meca1} ) à la troisième pulsation (ω_{meca1}) ; la troisième pulsation (ω_{meca1}) étant égale à la première pulsation (ω_{elec}) plus ou moins un multiple de la seconde pulsation (ω_{meca}) ;
- un régulateur (PID₁) associé audit filtre (FIL₁) pour générer le signal de commande (V_{cont}) de manière à maintenir à zéro l'amplitude d'un signal intermédiaire (X(V_{s,meca1})) extrait à partir de la composante spectrale du signal de mesure (V_{s,meca1}) généré par ledit filtre (FIL₁).

4. Dispositif de caractérisation (D1) selon l'une des revendications 1 ou 2 dans lequel le circuit de commande (20) comprend :
- une pluralité de filtres passe bande (FIL₁, FIL ₂, FIL ₃) de rangs i=1 à N, N étant un entier naturel non nul, chaque filtre de rang i étant configuré pour extraire une composante spectrale du signal de mesure (V_{s,meca1} ) à une pulsation (ω_{meca1}) égale à i fois la seconde pulsation (ω_{meca}) ;
- une pluralité de régulateurs (PID₁, PID₂, PID₃) de rangs i=1 à N; chaque régulateur de rang i étant configuré pour générer un signal de commande élémentaire (V_{cont,i}) de manière à maintenir l'amplitude de la composante spectrale du signal de mesure (V_{s,mecai}) généré par le filtre (FIL₁, FIL₂, FIL₃) de rang i à une valeur minimale (V_{s,meca1,min}, V_{s,meca2,min} , V_{s,meca3,min}).

5. Dispositif de caractérisation (D1) selon l'une des revendications 1 ou 3 dans lequel le circuit de commande (20) comprend :
- une pluralité de filtres passe bande (FIL₁, FIL₂, FIL₃) de rangs j=1 à N', N'étant un entier naturel non nul, chaque filtre de rang j étant configuré pour extraire une composante spectrale du signal de mesure (V_{s,meca1'}) à une pulsation (ω_{meca1'}) égale à la première pulsation (ω_{elec}) plus ou moins j fois la seconde pulsation (ω_{meca}) ;
- une pluralité de régulateurs (PID₁, PID₂, PID₃) de rangs j=1 à N'; chaque régulateur de rang j étant configuré pour générer un signal de commande élémentaire (V_{cont,j}) de manière à maintenir à zéro l'amplitude d'un signal intermédiaire (X(V_{s,mecaj})) extrait à partir de la composante spectrale du signal de mesure (V_{s,mecaj}) généré par le filtre (FIL₁, FIL₂, FIL₃) de rang j.

6. Dispositif de caractérisation (D1) selon l'une des revendications 4 ou 5 dans lequel le circuit de commande (20) comprend un calculateur (23) configuré pour générer un signal de commande (V_{cont}) correspondant à la moyenne des signaux de commande élémentaires (V_{cont,i} V_{cont,j}) .

7. Dispositif de caractérisation (D1) selon la revendication 6 dans lequel le calculateur (23) est configuré pour écarter un signal parmi les signaux de commande élémentaires (V_{cont,i} V_{cont,j}) du calcul de la moyenne lorsqu'il s'écarte des autres signaux de commande élémentaires (V_{cont,i} V_{cont,j}) par un seuil d'écartement prédéterminé.

8. Dispositif de caractérisation (D1) selon l'une des revendications 2 à 7 dans lequel chaque filtre passe bande (FIL₁, FIL ₂, FIL ₃) est réalisé par un amplificateur à détection synchrone.

9. Dispositif de caractérisation (D1) selon l'une des revendications 2 à 8 dans lequel chaque régulateur (PID₁, PID₂, PID₃) est un régulateur proportionnel-intégral-dérivé.

10. Dispositif de caractérisation (D1) selon la revendication 8 dans lequel chaque régulateur (PID₁, PID₂, PID₃) est un régulateur proportionnel-intégral-dérivé analogique.

11. Dispositif de caractérisation (D1) selon la revendication 8 dans lequel chaque régulateur (PID₁, PID₂, PID₃) est un régulateur proportionnel-intégral-dérivé numérique.

12. Dispositif de caractérisation (D1) selon l'une des revendications 1 à 11 dans lequel le premier actionneur (A1) est configuré pour appliquer une force de contact (F₀) continue sur l'ensemble formé par la pointe conductrice (P1) et levier (L1); et dans lequel le second actionneur (A2) est configuré pour appliquer une force d'oscillation (F₁) sur l'ensemble formé par la pointe conductrice (P1) et levier (L1) ;
L'amplitude de la force d'oscillation (F₁) étant strictement inférieure à celle de la force de contact (F₀).

13. Dispositif de caractérisation (D1) selon l'une des revendications 1 à 12 dans lequel l'ensemble formé par la pointe et l'échantillon incluant l'électrode inférieure présente une pulsation de résonance (ω₀) ; et dans lequel la seconde pulsation (ω_{meca}) est choisie égale à la pulsation de résonance (ω₀).

14. Dispositif de caractérisation (D1) selon l'une des revendications 1 à 12 dans lequel l'ensemble formé par la pointe et l'échantillon incluant l'électrode inférieure présente une pulsation de résonance (ω₀) ; et dans lequel la première pulsation (ω_{elec}) est choisie égale à la pulsation de résonance (ω₀) ; et dans lequel la seconde pulsation (ω_{meca}) est choisie hors de la plage de pulsations délimitée par un pic de résonance autour de la pulsation de résonance (ω₀).
